# FASCICULE DE BREVET EUROPEEN

(11) **EP 2 500 611 B1**
(45) Date de publication et mention de la délivrance du brevet: **24.02.2016**
(21) Numéro de dépôt: 12159051.7
(22) Date de dépôt: 12.03.2012
(51) Int. Cl.: F16L 37/098, F02M 55/00, F16L 37/133

(54) **Dispositif de raccordement pour transfert de fluide, circuit l'incorporant et son procédé de montage/ démontage.**
Anschlussvorrichtung für den Transfer eines Fluids, Kreislauf, der diese Vorrichtung umfasst, und entsprechendes Montage-/Demontageverfahren
Connection device for fluid transfer, circuit including said device and assembly/disassembly method thereof.

(30) Priorité: 15.03.2011 FR 1152103
(43) Date de publication de la demande: 19.09.2012
(73) Titulaire: Hutchinson, 75008 Paris (FR)
(72) Inventeur: Ully, Stéphane, 45120 Chalette sur Loing (FR); Godeau, Denis, 45260 Vieilles Maisons (FR)
(74) Mandataire: Gevers & Orès

(56) Documents cités:
- EP-A1- 2 083 206
- DE-A1-102009 028 473

## Description

La présente invention concerne un dispositif de raccordement pour une ligne de transfert de fluide, un circuit de retour d'injecteur de carburant l'incorporant, et un procédé de montage/ démontage de ce dispositif dans un embout tubulaire femelle à raccorder à un embout mâle que comprend ce dispositif. L'invention s'applique d'une manière générale à tous raccordements entre de tels embouts transférant un fluide en particulier à basse pression et notamment à des rampes d'injection de carburant pour véhicules à moteur.

D'une manière générale, il est connu pour les rampes d'injection de carburant d'utiliser des dispositifs de raccordement à embout tubulaire mâle venant s'emmancher d'une manière étanche dans un embout tubulaire femelle ou « canule », au moyen d'un organe de liaison flexible qui est monté solidaire de l'embout mâle et qui est verrouillable à son extrémité axialement intérieure dans une gorge circonférentielle interne de l'embout femelle sous la commande d'un organe de verrouillage coopérant avec une partie axialement extérieure de cet organe de liaison.

On peut par exemple citer le document WO-A-2007/042344 qui présente un tel dispositif où l'organe de liaison comporte deux bras axiaux diamétralement opposés qui sont formés d'un seul tenant avec l'embout mâle et qui viennent se verrouiller élastiquement dans la gorge de l'embout femelle par une flexion qui leur est appliquée dans la direction radiale, en s'opposant à leur traction axialement vers l'extérieur.

Un inconvénient majeur d'un tel dispositif de raccordement connu est que, dès lors que l'on verrouille l'embout mâle dans l'embout femelle alors que l'organe de liaison n'est pas positionné dans la gorge de raccordement de l'embout femelle, il n'est plus possible par la suite d'amener l'organe de liaison dans cette gorge.

Le document EP-A-2 236 894 au nom de la Demanderesse présente un dispositif de raccordement d'un autre type, comportant un organe de verrouillage qui à monter autour d'un embout mâle et dont l'extrémité axialement intérieure est adaptée pour se raccorder à la gorge d'un embout femelle et est formée par des pattes de raccordement élastiquement déformables en flexion radiale. Chacune de ces pattes est apte à être bloquée en position de verrouillage contre la gorge, suite à une poussée exercée sur l'organe de verrouillage, via la flexion des pattes au contact de rampes de guidage et d'aide au verrouillage associées à ces pattes qui sont formées en saillie radiale sur l'embout mâle.

Le dispositif de raccordement présenté dans ce dernier document donne toute satisfaction, du fait qu'il satisfait aux exigences d'étanchéité et de tenue mécanique qui sont propres aux rampes d'injection de carburant, notamment. Ces rampes et ces pattes associées confèrent notamment une fonction « auto-bloquante » en fonctionnement au dispositif en position de verrouillage, grâce à la force de compression radiale exercée par les rampes sur les pattes en les plaquant dans la gorge qui est d'autant plus forte que la pression du fluide circulant dans l'embout mâle est plus élevée. Il en résulte une sûreté de fonctionnement accrue du dispositif même sous des pressions élevées.

La Demanderesse a néanmoins cherché à perfectionner ce dispositif en lui adjoignant une sécurité supplémentaire ou double verrouillage. En effet, un inconvénient de ce dispositif est que son organe de verrouillage peut être abaissé axialement vers l'intérieur autour de l'embout mâle de sorte que ses pattes soient fléchies par les rampes de l'embout mâle même lorsque ce dernier se trouve hors de l'embout femelle, et qu'un opérateur ne sait pas toujours précisément à quel moment il doit abaisser cet organe autour de l'embout mâle pour bloquer les pattes dans la gorge de l'embout femelle.

Un but de la présente invention est donc de proposer un dispositif de raccordement pour une ligne de transfert de fluide en particulier à basse pression, qui remédie à ces inconvénients, ce dispositif comprenant :
- un embout tubulaire mâle,
- un moyen de raccordement destiné à être monté autour de l'embout mâle en étant raccordé à un embout tubulaire femelle par une face radialement interne de ce dernier, ce moyen étant apte à venir se loger dans une gorge de raccordement de cette face interne, et
- un organe de verrouillage du moyen de raccordement dans l'embout femelle, cet organe étant destiné à être monté autour de l'embout mâle pour amener réversiblement ce moyen dans une position de verrouillage dans ladite gorge.

A cet effet, un dispositif selon l'invention comprend des moyens de blocage et de libération de l'organe de verrouillage qui sont solidaires de l'embout mâle et sont élastiquement déformables par flexion au contact d'une extrémité d'entrée de ladite face interne de l'embout femelle, ces moyens de blocage et de libération étant adaptés pour empêcher que ledit moyen de raccordement soit amené dans ladite position de verrouillage tant que l'embout mâle n'occupe pas une position d'enfoncement prédéterminée dans l'embout femelle et, seulement si l'embout mâle a atteint ladite position d'enfoncement, pour libérer l'organe de verrouillage en autorisant son déplacement vers l'embout femelle de sorte qu'une poussée sur cet organe amène ledit moyen de raccordement dans ladite position de verrouillage.

Dans la présente description, on entendra par les expressions « axialement intérieure » ou « axialement vers l'intérieur» une localisation à l'état raccordé selon l'axe de symétrie des embouts mâle et femelle qui est dirigée vers l'intérieur du raccord, i.e. de manière proximale à la gorge de raccordement de l'embout femelle et, inversement, par les expressions « axialement extérieure » ou « axialement vers l'extérieur » une localisation selon cet axe à l'opposé (i.e. de manière distale) de cette gorge.

Selon une autre caractéristique de l'invention, lesdits moyens de blocage et de libération peuvent être escamotables par flexion élastique à la manière de bras de levier au contact de ladite extrémité d'entrée de l'embout femelle, ces moyens pouvant être aptes à occuper une position de blocage dans laquelle l'organe de verrouillage bute axialement sur ces moyens qui sont déployés radialement vers l'extérieur, et une position de libération dans laquelle cet organe est apte à coulisser librement vers l'embout femelle autour de ces moyens qui sont escamotés radialement vers l'intérieur.

Avantageusement, lesdits moyens de blocage et de libération peuvent comprendre une paire de bras formés d'un seul tenant avec l'embout mâle qui s'étendent symétriquement l'un de l'autre par rapport à l'axe de l'embout mâle à partir d'une zone axialement interne de celui-ci, ces bras, dans ladite position de blocage, étant déployés de part et d'autre de cette zone selon un même angle aigu et, dans ladite position de libération, étant repliés parallèlement à l'axe de l'embout mâle.

Selon une autre caractéristique de l'invention, l'organe de verrouillage peut comporter deux rebords ou épaulements internes qui sont adaptés pour buter respectivement sur deux extrémités libres desdits bras déployés dans leur position de blocage et pour se trouver radialement à l'extérieur des bras dans ladite position de libération, ces rebords ou épaulements étant formés axialement vers l'extérieur d'une extrémité de raccordement axialement intérieure que comprend ledit moyen de raccordement et étant destinés à se trouver axialement à l'extérieur de l'embout femelle dans ladite position de verrouillage.

Selon une autre caractéristique de l'invention, chacun desdits bras, par exemple en forme de lamelle oblongue, présente une face externe par rapport à l'embout mâle sur laquelle peut être formée en saillie au moins une protubérance conçue pour coopérer avec ladite extrémité d'entrée de l'embout femelle lorsque l'embout mâle occupe ladite position d'enfoncement, ladite au moins une protubérance étant de préférence formée sensiblement à mi-hauteur du bras correspondant.

Selon un exemple avantageux de réalisation de l'invention, chacun desdits bras présente au moins deux dites protubérances sous forme de nervures transversales parallèles qui sont aptes à faire se refermer ce bras pour l'obtention de sa position de libération et en outre à émettre, par frottement au contact de ladite extrémité d'entrée de l'embout femelle, un bruit informant un opérateur que ladite position d'enfoncement de l'embout mâle est atteinte et donc que ledit moyen de raccordement peut être verrouillé dans ladite gorge.

On notera que ces bras formant lesdits moyens de blocage et de libération de l'organe de verrouillage peuvent également servir à guider angulairement l'embout mâle en translation dans l'embout femelle pour faciliter le centrage des pattes de raccordement à l'entrée de ladite gorge.

Selon une autre caractéristique de l'invention, ledit moyen de raccordement peut être formé d'un seul tenant avec l'organe de verrouillage dont il forme une partie axialement intérieure, ce moyen de raccordement pouvant comporter une extrémité de raccordement axialement intérieure comprenant par exemple au moins deux pattes de raccordement élastiquement déformables dans la direction radiale s'étendant axialement vers l'intérieur et radialement vers l'extérieur, les faces radialement externe et interne de chaque patte étant aptes à être bloquées dans ladite position de verrouillage, par une flexion de chaque patte, respectivement contre ladite gorge et contre l'une des rampes correspondantes de guidage et d'aide au verrouillage que présente l'embout mâle et qui sont respectivement associées auxdites pattes, lesdits moyens de blocage et de libération étant adaptés pour coopérer avec l'organe de verrouillage indépendamment desdites rampes et pattes.

On notera que ces pattes de raccordement et les rampes de guidage/ blocage associées peuvent par exemple être telles que décrites dans le document EP-A-2 236 894 précité au nom de la Demanderesse. Ces pattes formées d'un seul tenant avec l'organe de verrouillage présentent l'avantage d'impliquer un coût réduit et un montage aisé pour le dispositif en comparaison des autres dispositifs connus à deux pièces, et contribuent en outre à conférer à ce dispositif une tenue mécanique à l'arrachement améliorée, comme expliqué ci-dessus.

Selon une autre caractéristique de cet exemple de l'invention utilisant des pattes de raccordement guidées et bloquées dans la gorge de l'embout femelle par des rampes de l'embout mâle, lesdits bras sont formés angulairement entre ces rampes qui sont par exemple au nombre de deux et diamétralement opposées, ladite au moins une protubérance de chaque bras étant formée axialement à l'extérieur de chacune des rampes.

Selon une autre caractéristique de cet exemple de l'invention utilisant lesdites pattes et rampes, l'organe de verrouillage a lesdits rebords ou épaulements internes qui sont formés angulairement entre ces pattes et axialement à l'extérieur de ces dernières, ces pattes par exemple au nombre de deux pouvant être chacune en arc de cercle et étant reliées entre elles par autant d'encoches qui sont conçues pour rendre ces pattes suffisamment déformables en flexion radiale.

Avantageusement, l'organe de verrouillage comprend des moyens de préhension formant une extrémité axialement extérieure de cet organe et pouvant présenter au moins un plateau radial destiné à recevoir une poussée manuelle d'un opérateur vers l'embout femelle, cet organe pouvant coopérer avec l'embout mâle pour témoigner visuellement de l'obtention de ladite position de verrouillage pour ledit moyen de raccordement.

Ces moyens de préhension peuvent par exemple être constitués d'un unique plateau radial de poussée qui est monté amovible sur un bord axialement extérieur de préférence discontinu de l'organe de verrouillage et qui, dans ladite position de verrouillage, coopère avec un pion axial témoin de verrouillage s'étendant entre deux surfaces d'appui de l'embout mâle de sorte que ce pion de l'embout mâle affleure la face externe dudit plateau, laquelle face se situe alors axialement de niveau avec et entre ces deux surfaces d'appui.

En variante, ces moyens de préhension de l'organe de verrouillage peuvent comprendre deux plateaux radiaux de poussée qui s'étendent de part et d'autre d'une unique surface d'appui de l'embout mâle, à l'instar de l'organe décrit dans le document EP-A-2 236 894 précité.

Un circuit de retour d'injecteur de carburant selon l'invention comporte un embout tubulaire mâle raccordé à un embout tubulaire femelle par un dispositif de raccordement tel que défini ci-dessus.

Un procédé de montage en position de verrouillage et de démontage d'un dispositif de raccordement tel que défini ci-dessus dans un embout tubulaire femelle à raccorder à un embout mâle que comprend ce dispositif, comprend les étapes successives suivantes pour ce montage:
a) on positionne le moyen de raccordement et l'organe de verrouillage autour de l'embout mâle de telle manière que l'organe de verrouillage bute axialement sur lesdits moyens de blocage et de libération, ce qui empêche de déplacer le moyen de raccordement axialement vers l'intérieur,
b) on enfonce l'embout mâle dans l'embout femelle pour le connecter à ce dernier dans ladite position d'enfoncement prédéterminée, ce qui déforme élastiquement par flexion ces moyens de blocage et de libération au contact de ladite extrémité d'entrée de l'embout femelle de sorte que l'organe de verrouillage ne bute plus sur ces moyens qui autorisent alors le déplacement du moyen de raccordement axialement vers l'intérieur, puis
c) on exerce une poussée axialement vers l'intérieur sur l'organe de verrouillage pour amener le moyen de raccordement dans ladite position de verrouillage à l'intérieur de la gorge de l'embout femelle,
et, pour le démontage du dispositif, on exerce une traction axialement vers l'extérieur sur l'organe de verrouillage tout en maintenant l'embout mâle contre le fond de l'embout femelle de sorte à extraire de ce dernier le moyen de raccordement, puis on extrait l'embout mâle de l'embout femelle.

Selon une autre caractéristique de l'invention, l'on peut faire buter à l'étape a) deux rebords ou épaulements internes de l'organe de verrouillage, qui sont formés axialement vers l'extérieur dudit moyen de raccordement, contre des extrémités libres respectives de deux bras escamotables qui forment lesdits moyens de blocage et de libération, puis, à l'étape b), l'on peut escamoter par flexion ces bras radialement vers l'intérieur desdits rebords ou épaulements internes correspondants au contact de ladite extrémité d'entrée de l'embout femelle, en faisant frotter au moins une protubérance externe située sensiblement à mi-hauteur de chaque bras contre un chanfrein de cette extrémité d'entrée.

Selon une autre caractéristique de l'invention, dans ladite position de verrouillage obtenue suite à l'étape c), lesdits rebords ou épaulements internes de l'organe de verrouillage se trouvent axialement à l'extérieur de l'embout femelle, et deux pattes de raccordement diamétralement opposées et élastiquement déformables qui forment ledit moyen de raccordement peuvent être bloquées par flexion contre ladite gorge et contre deux rampes correspondantes de guidage et d'aide au verrouillage que présente l'embout mâle et qui sont respectivement associées à ces pattes, lesquelles sont situées angulairement de part et d'autre desdits bras.

D'autres caractéristiques, avantages et détails de la présente invention ressortiront à la lecture de la description suivante d'un exemple de réalisation de l'invention donné à titre illustratif et non limitatif, cette description étant réalisée en référence avec les dessins joints, parmi lesquels :
la figure 1 est une vue en perspective éclatée d'un dispositif de raccordement selon l'invention destiné à être monté dans un embout femelle (représenté partiellement),
la figure 2 est une vue éclatée en élévation du dispositif et de l'embout femelle de la figure 1,
la figure 3 est une vue éclatée en coupe axiale de ce dispositif et de cet embout femelle suivant le plan III-III de la figure 1,
la figure 4 est une vue de détail assemblée en coupe axiale du dispositif de la figure 3 sans l'embout femelle le recevant, dans une position de blocage des bras de l'embout mâle sur lesquels bute l'organe de verrouillage,
la figure 5 est une vue en coupe axiale du dispositif de la figure 4 avec l'embout mâle qui est partiellement enfoncé dans l'embout femelle de la figure 3 et qui a ses bras dans cette position de blocage,
la figure 6 est une vue en coupe axiale du dispositif de la figure 5 avec l'embout mâle qui est complètement enfoncé dans l'embout femelle et qui a ses bras en position de libération de l'organe de verrouillage,
la figure 7 est une vue en coupe axiale du dispositif de la figure 6 avec l'embout mâle complètement enfoncé dans l'embout femelle, dans une position de verrouillage de l'organe de verrouillage obtenue suite au coulissement de celui-ci vers l'embout femelle,
la figure 8 est une vue en coupe axiale du dispositif de la figure 7 suivant le plan VIII-VIII de la figure 1, montrant l'extrémité de raccordement de l'organe de verrouillage dans la position de verrouillage, et
la figure 9 est une vue en coupe axiale du même dispositif dans cette position de verrouillage, avec la moitié gauche de l'organe de verrouillage montrée dans le plan de coupe de la figure 8 et sa moitié droite dans le plan de coupe orthogonal de la figure 7.

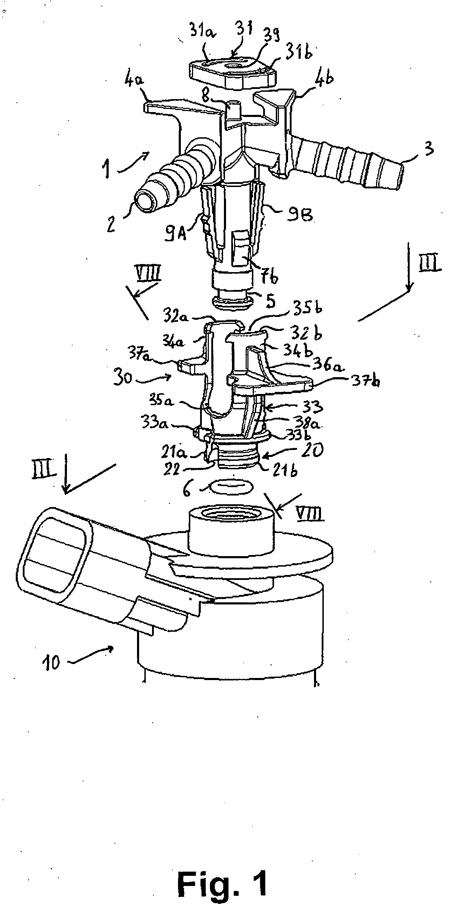

L'embout tubulaire mâle 1 illustré à la figure 1 présente de manière connue, en son extrémité axialement extérieure (i.e. supérieure), deux raccords de branchement 2 et 3 en forme de queues de sapin qui s'étendent symétriquement de part et d'autre de deux surfaces d'appui 4a, 4b pour l'opérateur que présente cet embout 1 et, en son extrémité axialement intérieure (i.e. inférieure), une gorge circonférentielle 5 destinée à recevoir un joint torique d'étanchéité 6 monté ou surmoulé dans cette gorge 5. De plus, deux rampes 7a, 7b sont formées en saillie radiale sur une partie inférieure de l'embout mâle 1 située au-dessus de la gorge 5 en vue d'exercer une fonction de guidage et d'aide au verrouillage, comme cela sera expliqué ci-après.

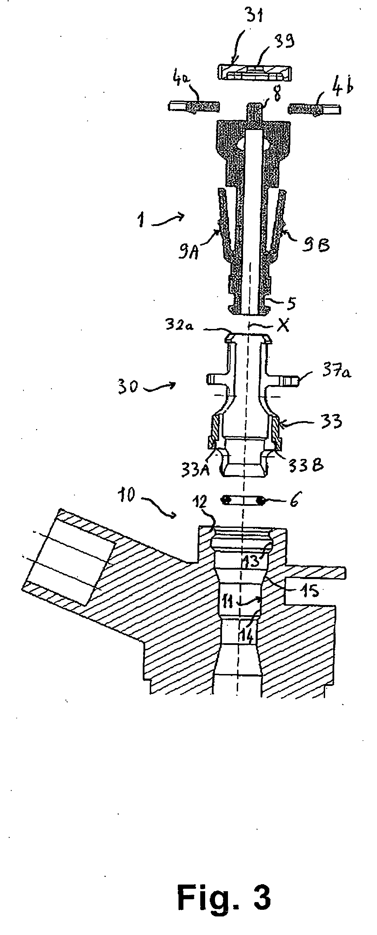

L'embout tubulaire femelle 10 (notamment visible à la figure 3), de type canule et de forme standard, présente essentiellement sur sa face radialement interne 11, à proximité immédiate de son extrémité d'entrée axialement externe 12 (i.e. supérieure), une gorge circonférentielle de raccordement 13 qui est de section axiale sensiblement trapézoïdale et qui est destinée à recevoir un moyen de raccordement 20 axialement intérieur formé en une extrémité inférieure du dispositif. L'embout femelle 10 présente en outre, à proximité immédiate de son extrémité axialement intérieure, une zone circonférentielle d'étanchéité 14 destinée à recevoir le joint 6. De manière connue, la section interne de l'embout femelle 10 présente un rétrécissement 15 axialement en dessous de la gorge 13.

Plus précisément, l'extrémité de raccordement 20 est formée par deux pattes 21a, 21b en arcs de cercle élastiquement déformables en flexion radiale (au nombre de deux dans cet exemple de réalisation et en forme de lobes), qui sont incluses dans un organe de verrouillage 30 du dispositif en en formant l'extrémité inférieure. Cet organe 30 est réalisé en un matériau plastique de bonne tenue mécanique comme par exemple un polyamide, et il comporte essentiellement dans cet exemple de réalisation :
- un moyen de préhension 31 formant une extrémité supérieure de l'organe 30 et constitué d'un plateau radial qui est destiné à recevoir une poussée manuelle d'un opérateur vers l'embout femelle 10 et qui est monté amovible sur deux portions de bord supérieures en arc de cercle 32a, 32b d'un corps principal 33 de l'organe 30 par l'intermédiaire de deux lumières 31 a, 31 b correspondantes du plateau 31 les recevant, et
- le corps principal 33 globalement cylindrique, avec ses portions de bord 32a, 32b qui se prolongent vers le bas en arcs de cylindre 34a, 34b diamétralement opposés reliés entre eux par deux encoches 35a, 35b dans cet exemple de réalisation, les deux arcs 34a, 34b étant respectivement munis de deux ailettes latérales de renforcement axiales 36a supportées par deux rebords radiaux 37a, 37b sous lesquels s'étendent deux ailettes latérales axiales 38a, le corps 33 se terminant par les pattes 21 a, 21 b.

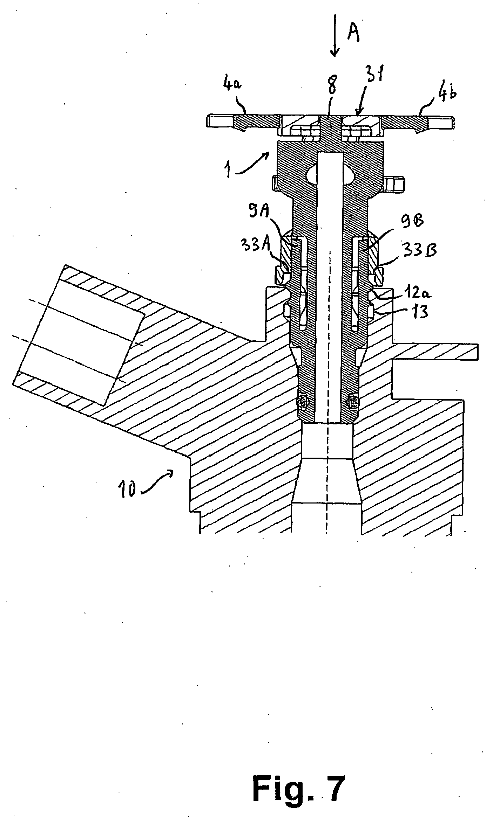

Plus précisément, le plateau de préhension 31 présente un orifice traversant 39 centré entre les lumières 31a, 31b qui, lorsqu'il est soumis à la poussée axiale d'un opérateur vers l'embout femelle dans la direction de la flèche A pour l'obtention de la position de verrouillage illustrée à la figure 7, a non seulement ses lumières 31a, 31b comblées par les portions de bord sous-jacentes 32a, 32b mais encore l'orifice 39 qui est traversé de manière affleurante par un pion axial témoin de verrouillage 8 s'étendant entre les deux surfaces d'appui 4a, 4b de l'embout mâle 1 de sorte que le pion 8 affleure de manière visible la face externe du plateau 31 pour témoigner de l'obtention de la position de verrouillage (par exemple par une couleur de l'embout 1 contrastant avec celle du plateau 31), étant précisé que ce plateau 31 vient alors combler le renfoncement 9 prévu entre les surfaces d'appui 4a, 4b qui se situent alors axialement de niveau avec ce plateau 31.

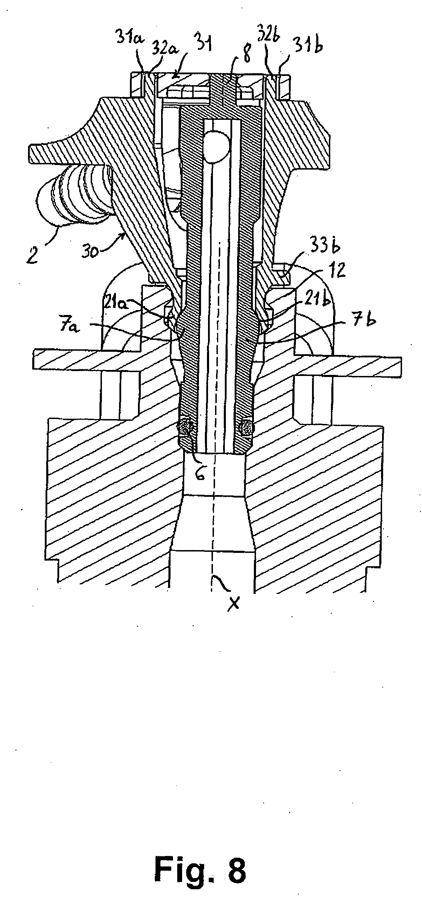

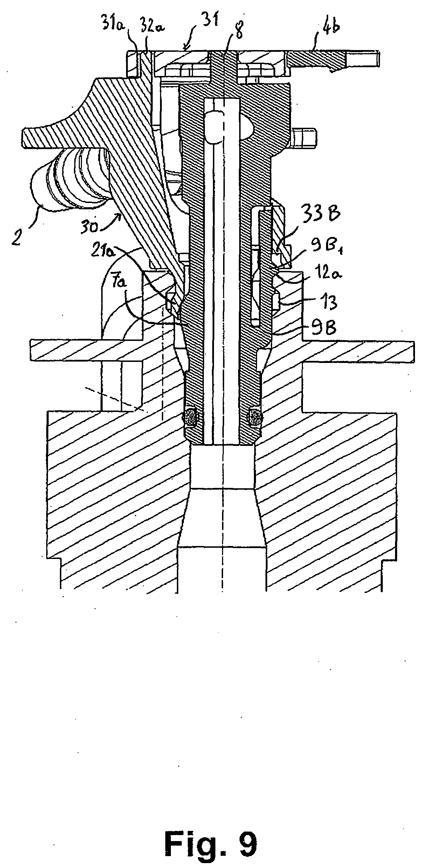

Quant aux pattes de raccordement 21a, 21b, on voit aux figures 8 et 9 qu'elles s'étendent vers le bas respectivement sous deux demi-collerettes inférieures 33a, 33b du corps principal 33 situées en dessous des encoches 35a, 35b et qu'elles sont aptes à être bloquées en position de verrouillage contre la gorge 13 par leur flexion générée par les rampes respectives 7a, 7b de guidage et d'aide au verrouillage. On pourra se reporter au document précité EP-A1-2 236 894 pour une description précise des pattes 21a, 21 b et rampes 7a, 7b associées, étant simplement rappelé que les pattes 21a, 21b sont rendues élastiquement déformables en flexion radiale par deux encoches 22 les reliant entre elles et que les rampes 7a, 7b sont diamétralement opposées sur l'embout mâle 1 à une même hauteur axiale à l'instar des pattes 21a, 21b qu'elles sont destinées à guider axialement et à contraindre radialement dans l'embout femelle 10.

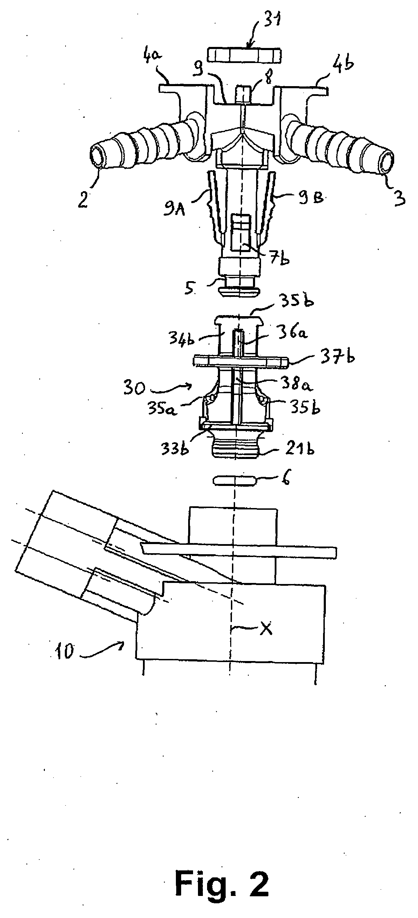

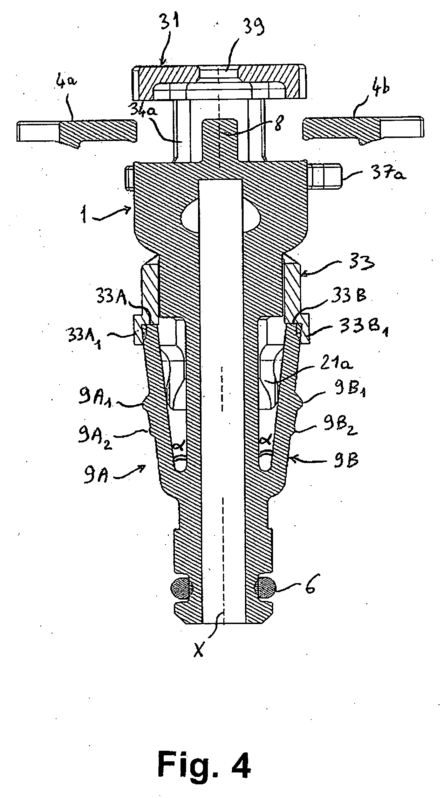

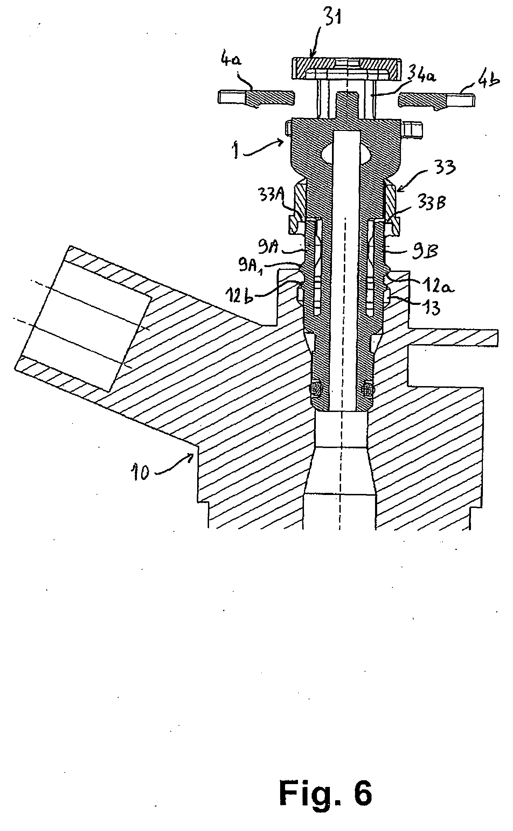

Selon la présente invention, l'embout mâle 1 comporte en outre deux bras en forme de lamelles oblongues 9A, 9B (i.e. plates et étroites en comparaison de leur longueur) qui s'étendent vers le haut symétriquement l'un de l'autre à partir d'une zone inférieure (i.e. axialement interne) de l'embout 1 située sensiblement à la même hauteur axiale que les rampes 7a, 7b, mais en décalage angulaire de 90° entre deux rampes 7a, 7b (cette formation en alternances des rampes 7a, 7b et bras 9A, 9B sur la circonférence de l'embout 1 et avec ces derniers qui naissent à la même hauteur que les rampes 7a, 7b est visible aux figures 1, 2 et 9). Les bras 9A, 9B s'étendent dans une direction sensiblement axiale en formant en quelque sorte un trident avec l'embout 1, et ils sont aptes à occuper :
- une position de blocage de l'organe de verrouillage 30 dans laquelle les extrémités libres respectives des bras 9A, 9B servent de butées axiales pour l'organe 30 par l'intermédiaire de deux épaulements internes 33A, 33B formés axialement au niveau et entre les demi-collerettes 33a, 33b et en décalage angulaire de 90° avec les pattes de raccordement 21 a, 21 b (voir figures 1 et 4), de telle manière que les bras 9A, 9B forment un angle aigu a (figure 4) avec l'axe X de l'embout 1 dans cette position de blocage, et
- une position de libération de l'organe 30, préalable nécessaire à l'obtention de la position de verrouillage, dans laquelle les extrémités des bras 9A, 9B sont escamotées radialement vers l'intérieur des épaulements 33A, 33B uniquement lorsque l'embout mâle est complètement enfoncé dans l'embout femelle 10, du fait d'un contact entre un bossage de chaque bras 9A, 9B et l'extrémité supérieure d'entrée 12 de l'embout femelle 10 qui ne se produit qu'à ce degré d'enfoncement, de sorte que ces extrémités de bras ne forment plus des butées axiales pour l'organe 30 (cette position de libération où les bras 9A, 9B sont repliés parallèlement à l'axe X de l'embout 1 est illustrée aux figures 6, 7 et 9).

Comme visible à la figure 4, on notera que la fiabilité de cette position de blocage, où les bras 9A, 9B forment des butées s'opposant au coulissement axial de l'organe de verrouillage 30, est avantageusement renforcée en prévoyant pour chaque épaulement interne 33A, 33B une largeur dans la direction radiale au moins égale à celle de l'extrémité de chaque bras 9A, 9B pour l'obtention d'une interface radiale de butée d'aire maximisée. De plus, chaque épaulement 33A, 33B se termine par un rebord inférieur axial (i.e. vertical) 33A₁, 33B₁ qui est perpendiculaire à cette interface radiale de butée et qui est apte à être monté au contact de la face externe du bras 9A, 9B correspondant dans cette position de blocage.

Plus précisément et comme visible aux figures 4 à 6, chaque bras 9A, 9B présente dans une zone médiane de sa face externe (i.e. celle qui est tournée à l'opposé de l'axe X de l'embout 1) un même bossage qui est formé dans cet exemple de l'invention de deux protubérances 9A₁, 9B₁ et 9A₂, 9B₂ qui sont en forme de nervures ou dents parallèles transversales à ce bras 9A, 9B et qui sont reliées entre elles par une surface légèrement en saillie vers l'extérieur par rapport au reste du bras 9A, 9B. Chaque bossage est conçu pour coopérer par frottement avec un chanfrein 12a externe (i.e. supérieur) de l'extrémité d'entrée 12 de l'embout femelle 10 uniquement au moment où l'embout mâle 1 est complètement enfoncé dans cet embout 10, et c'est notamment chaque protubérance supérieure 9A₁, 9B₁, qui est dans cet exemple la plus saillante qui, lorsqu'elle vient frotter contre la surface oblique de ce chanfrein 12a, optimise la flexion des bras 9A, 9B en générant leur repliement parallèlement à l'axe X de l'embout 1 par basculement à la manière d'un levier.

On notera que cette localisation du bossage de chaque bras 9a, 9B en vue de sa coopération avec le chanfrein d'entrée 12a permet de retarder dans une certaine mesure le repliement de chaque bras 9A, 9B suite à son contact avec ce chanfrein 12a.

On notera également que dans la position de libération escamotée des bras 9A, 9B, les deux protubérances 9A₁, 9A₂ et 9B₁, 9B₂ épousent les chanfreins d'entrée 12a et de sortie 12b de l'extrémité d'entrée 12 de l'embout femelle 10 qu'elles entourent (voir figure 6).

Avantageusement, le frottement de chaque bossage sur l'extrémité d'entrée 12 de l'embout femelle 10 a pour effet d'augmenter sensiblement pour l'opérateur l'effort d'enfoncement de l'embout mâle 1 dans l'embout femelle 10 et ce frottement peut en outre générer un signal sonore de type « clic » audible par l'opérateur, cet effort accru et/ou ce signal le renseignant sur l'obtention de cette position d'enfoncement correcte de l'embout mâle 1 dans l'embout femelle 10, l'invitant ainsi à manoeuvrer à ce moment précis l'organe de verrouillage 30 en le poussant vers l'embout femelle 10 pour l'obtention de la position de verrouillage.

On notera en outre que les bras 9A, 9B permettent également de guider de manière angulaire l'embout 1 en translation dans l'embout femelle 10 pour faciliter le centrage des pattes 21a, 21b à l'entrée de la gorge de raccordement 13.

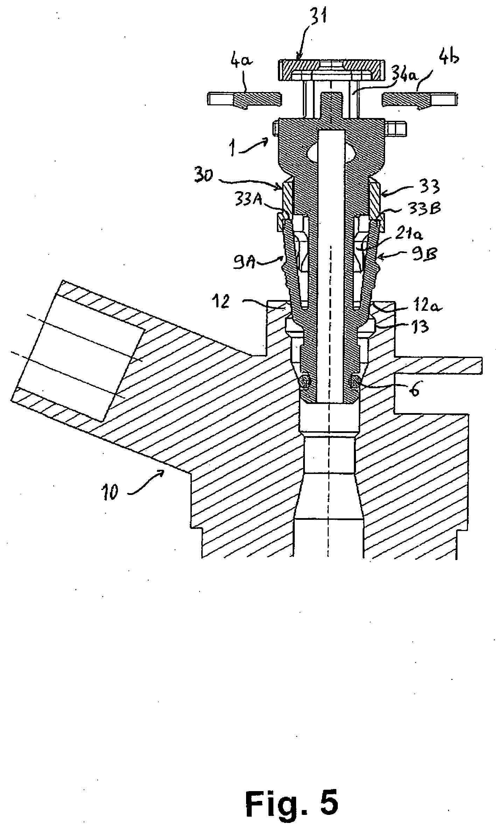

Comme illustré aux figures 5 à 9, on procède de la manière suivante pour verrouiller le raccordement des pattes 21a, 21b dans la gorge 13 de l'embout femelle 10 :
a) on insère par en dessous le corps principal 33 de l'organe 30 autour de l'embout mâle 1 puis on assemble le plateau de préhension 31 sur ce corps 33, de manière que les pattes 21a, 21b soient disposées angulairement en regard des rampes 7a et 7b et de part et d'autre des bras 9A, 9B et que ce corps 33 bute axialement par ses épaulements internes 33A, 33B sur ces bras 9A, 9B, empêchant ainsi de déplacer les pattes 21a, 21b vers le bas (voir figure 5),
b) on enfonce complètement l'embout mâle 1 dans l'embout femelle 10, ce qui déforme élastiquement par flexion les bras 9A, 9B par le frottement de leur bossage contre le chanfrein 12a d'entrée de l'embout 10 de sorte que l'organe 30 ne bute plus sur ces bras 9A et 9B ainsi escamotés radialement vers l'intérieur des épaulements 33A, 33B, ce qui autorise le coulissement vers le bas de l'organe 30 (voir figure 6), puis
c) on exerce une poussée vers le bas sur l'organe de verrouillage (i.e. vers l'embout femelle 10) pour amener les pattes 21 a, 21 b en position de verrouillage à l'intérieur de la gorge 13 de cet embout 10 (voir figures 7 à 9).

Dans cette position de verrouillage, il convient de noter que les épaulements internes 33A, 33B de l'organe 30 se trouvent hors de l'embout femelle 10 et que les deux pattes 21a, 21b sont bloquées par flexion contre la gorge 13 et contre les rampes 7a, 7b associées de guidage et d'aide au verrouillage.

Pour déverrouiller et démonter le dispositif de raccordement hors de la gorge 13, on exerce d'abord une traction vers le haut sur l'organe de verrouillage 30 tout en maintenant l'embout mâle 1 contre le fond de l'embout femelle 10, de sorte à extraire de ce dernier les pattes 21 a, 21b, puis on extrait l'embout mâle 1 de l'embout femelle 10.

## Revendications

1. Dispositif de raccordement pour une ligne de transfert de fluide en particulier à basse pression, comprenant :
- un embout tubulaire mâle (1),
- un moyen de raccordement (20) destiné à être monté autour de l'embout mâle en étant raccordé à un embout tubulaire femelle (10), ce moyen étant apte à venir se loger dans une gorge de raccordement (13) de l'embout femelle, et
- un organe de verrouillage (30) du moyen de raccordement dans l'embout femelle, cet organe étant destiné à être monté autour de l'embout mâle pour amener réversiblement ce moyen dans une position de verrouillage dans ladite gorge,
**caractérisé en ce que** ce dispositif comprend des moyens de blocage et de libération (9A, 9B) de l'organe de verrouillage qui sont solidaires de l'embout mâle et sont élastiquement déformables par flexion au contact d'une extrémité d'entrée (12) de l'embout femelle, ces moyens de blocage et de libération étant adaptés pour empêcher que ledit moyen de raccordement soit amené dans ladite position de verrouillage tant que l'embout mâle n'occupe pas une position d'enfoncement prédéterminée dans l'embout femelle et, seulement si l'embout mâle a atteint ladite position d'enfoncement, pour libérer l'organe de verrouillage en autorisant son déplacement vers l'embout femelle de sorte qu'une poussée (A) sur cet organe amène ledit moyen de raccordement dans ladite position de verrouillage.

2. Dispositif de raccordement selon la revendication 1, **caractérisé en ce que** lesdits moyens de blocage et de libération (9A, 9B) sont escamotables par flexion élastique à la manière de bras de levier au contact de ladite extrémité d'entrée (12) dé l'embout femelle (10), ces moyens étant aptes à occuper une position de blocage dans laquelle l'organe de verrouillage (30) bute axialement sur ces moyens qui sont déployés radialement vers l'extérieur, et une position de libération dans laquelle cet organe est apte à coulisser librement vers l'embout femelle autour de ces moyens qui sont escamotés radialement vers l'intérieur.

3. Dispositif de raccordement selon la revendication 2, **caractérisé en ce que** lesdits moyens de blocage et de libération (9A, 9B) comprennent une paire de bras (9A, 9B) formés d'un seul tenant avec l'embout mâle (1) qui s'étendent symétriquement l'un de l'autre par rapport à l'axe (X) de l'embout mâle à partir d'une zone axialement interne de celui-ci, ces bras, dans ladite position de blocage, étant déployés de part et d'autre de cette zone selon un même angle aigu (α) et, dans ladite position de libération, étant repliés parallèlement à l'axe de l'embout mâle.

4. Dispositif de raccordement selon la revendication 3, **caractérisé en ce que** l'organe de verrouillage (30) comporte deux rebords ou épaulements internes (33A, 33B) qui sont adaptés pour buter respectivement sur deux extrémités libres desdits bras (9A, 9B) déployés dans leur position de blocage et pour se trouver radialement à l'extérieur des bras dans ladite position de libération, ces rebords ou épaulements étant formés axialement vers l'extérieur d'une extrémité de raccordement (20) axialement intérieure que comprend ledit moyen de raccordement (20) et étant destinés à se trouver axialement à l'extérieur de l'embout femelle (10) dans ladite position de verrouillage.

5. Dispositif de raccordement selon la revendication 3 ou 4, **caractérisé en ce que** chacun desdits bras (9A, 9B), par exemple en forme de lamelle oblongue, présente une face externe par rapport à l'embout mâle (1) sur laquelle est formée en saillie au moins une protubérance (9A, 9A₂, 9B₁, 9B₂) conçue pour coopérer avec ladite extrémité d'entrée (12) de l'embout femelle (10) lorsque l'embout mâle occupe ladite position d'enfoncement, ladite au moins une protubérance étant de préférence formée sensiblement à mi-hauteur du bras correspondant.

6. Dispositif de raccordement selon la revendication 5, **caractérisé en ce que** chacun desdits bras (9A, 9B) présente au moins deux dites protubérances (9A₁, 9A₂, 9B₁, 9B₂) sous forme de nervures transversales parallèles qui sont aptes à faire se refermer ce bras pour l'obtention de sa position de libération et en outre à émettre, par frottement au contact de ladite extrémité d'entrée (12) de l'embout femelle (10), un bruit informant un opérateur que ladite position d'enfoncement de l'embout mâle (1) est atteinte et donc que ledit moyen de raccordement (20) peut être verrouillé dans ladite gorge (13).

7. Dispositif de raccordement selon une des revendications précédentes, **caractérisé en ce que** ledit moyen de raccordement (20) est formé d'un seul tenant avec l'organe de verrouillage (30) dont il forme une partie axialement intérieure, ce moyen de raccordement comportant une extrémité de raccordement (20) axialement intérieure comprenant au moins deux pattes de raccordement (21a, 21b) élastiquement déformables dans la direction radiale s'étendant axialement vers l'intérieur et radialement vers l'extérieur, les faces radialement externe et interne de chaque patte étant aptes à être bloquées dans ladite position de verrouillage, par une flexion de chaque patte, respectivement contre ladite gorge (13) et contre l'une des rampes (7a, 7b) correspondantes de guidage et d'aide au verrouillage que présente l'embout mâle (1) et qui sont respectivement associées auxdites pattes, lesdits moyens de blocage et de libération (9A, 9B) étant adaptés pour coopérer avec l'organe de verrouillage indépendamment desdites rampes et pattes.

8. Dispositif de raccordement selon la revendication 5 ou 6 et selon la revendication 7, **caractérisé en ce que** lesdits bras (9A, 9B) sont formés angulairement entre lesdites rampes (7a, 7b) qui sont par exemple au nombre de deux et diamétralement opposées, ladite au moins une protubérance (9A₁, 9A₂, 9B₁, 9B₂) de chaque bras étant formée axialement à l'extérieur de chacune des rampes.

9. Dispositif de raccordement selon les revendications 4 et 8, **caractérisé en ce que** l'organe de verrouillage (30) a lesdits rebords ou épaulements internes (33A, 33B) qui sont formés angulairement entre lesdites pattes de raccordement (21a, 21b) et axialement à l'extérieur de ces dernières, lesdites pattes par exemple au nombre de deux étant chacune en arc de cercle et étant reliées entre elles par autant d'encoches (22) qui sont conçues pour rendre ces pattes suffisamment déformables en flexion radiale.

10. Dispositif de raccordement selon une des revendications précédentes, **caractérisé en ce que** l'organe de verrouillage (30) comprend des moyens de préhension (31) formant une extrémité axialement extérieure de cet organe et présentant au moins un plateau radial (31) destiné à recevoir une poussée manuelle d'un opérateur vers l'embout femelle (10), cet organe coopérant avec l'embout mâle (1) pour témoigner visuellement de l'obtention de ladite position de verrouillage pour ledit moyen de raccordement (20).

11. Dispositif de raccordement selon la revendication 10, **caractérisé en ce que** lesdits moyens de préhension (31) sont constitués d'un unique plateau radial de poussée (31) qui est monté amovible sur un bord axialement extérieur (32a, 32b) de l'organe de verrouillage (30) et qui, dans ladite position de verrouillage, coopère avec un pion axial témoin de verrouillage (8) s'étendant entre deux surfaces d'appui (4a et 4b) de l'embout mâle (1) de sorte que ce pion de l'embout mâle affleure la face externe dudit plateau, laquelle face se situe alors axialement de niveau avec et entre ces deux surfaces d'appui.

12. Circuit de retour d'injecteur de carburant comportant un embout tubulaire mâle (1) raccordé à un embout tubulaire femelle (10) par un dispositif de raccordement, **caractérisé en ce que** ce dispositif est tel que défini à l'une des revendications précédentes.

13. Procédé de montage en position de verrouillage et de démontage d'un dispositif de raccordement selon une des revendications 1 à 11 dans un embout tubulaire femelle (10) à raccorder à un embout mâle (1) que comprend ce dispositif, **caractérisé en ce qu'**il comprend les étapes successives suivantes pour ce montage:
a) on positionne le moyen de raccordement (20) et l'organe de verrouillage (30) autour de l'embout mâle de telle manière que l'organe de verrouillage bute axialement sur lesdits moyens de blocage et de libération, ce qui empêche de déplacer le moyen de raccordement axialement vers l'intérieur,
b) on enfonce l'embout mâle dans l'embout femelle pour le connecter à ce dernier dans ladite position d'enfoncement prédéterminée, ce qui déforme élastiquement par flexion ces moyens de blocage et de libération au contact de ladite extrémité d'entrée (12) de l'embout femelle de sorte que l'organe de,verrouillage ne bute plus sur ces moyens qui autorisent alors le déplacement du moyen de raccordement axialement vers l'intérieur, puis
c) on exerce une poussée (A) axialement vers l'intérieur sur l'organe de verrouillage pour amener le moyen de raccordement dans ladite position de verrouillage à l'intérieur de ladite gorge (13) de l'embout femelle,
et **en ce que**, pour le démontage du dispositif, on exerce une traction axialement vers l'extérieur sur l'organe de verrouillage tout en maintenant l'embout mâle contre le fond de l'embout femelle de sorte à extraire de ce dernier le moyen de raccordement, puis on extrait l'embout mâle de l'embout femelle.

14. Procédé selon la revendication 13, **caractérisé en ce que** l'on fait buter à l'étape a) deux rebords ou épaulements internes (33A, 33B) de l'organe de verrouillage (30), qui sont formés axialement vers l'extérieur dudit moyen de raccordement (20), contre des extrémités libres respectives de deux bras escamotables (9A, 9B) qui forment lesdits moyens de blocage et de libération (9A, 9B), puis **en ce que**, à l'étape b), l'on escamote par flexion ces bras radialement vers l'intérieur des rebords ou épaulements internes correspondants au contact de ladite extrémité d'entrée (12) de l'embout femelle (10), en faisant frotter au moins une protubérance externe (9A₁, 9A₂, 9B₁, 9B₂) située sensiblement à mi-hauteur de chaque bras contre un chanfrein (12a) de cette extrémité d'entrée.

15. Procédé selon la revendication 14, **caractérisé en ce que** dans ladite position de verrouillage obtenue suite à l'étape c), lesdits rebords ou épaulements internes (33A, 33B) de l'organe de verrouillage (30) se trouvent axialement à l'extérieur de l'embout femelle (10), et **en ce que** deux pattes de raccordement (21a, 21b) diamétralement opposées et élastiquement déformables qui forment ledit moyen de raccordement (20) sont bloquées par flexion contre ladite gorge (13) et contre deux rampes (7a, 7b) correspondantes de guidage et d'aide au verrouillage que présente l'embout mâle (1) et qui sont respectivement associées auxdites pattes, lesquelles sont situées angulairement de part et d'autre desdits bras (9A, 9B).

## Patentansprüche

1. Anschlussvorrichtung für eine Transferleitung eines Fluids, insbesondere Niederdruck, umfassend:
- eine rohrförmige Einsteckmuffe (1),
- ein Anschlussmittel (20), das zur Montage um die Einsteckmuffe bestimmt ist, indem es an eine rohrförmige Muffe (10) angeschlossen ist, wobei dieses Mittel imstande ist, in eine Anschlussnut (13) der Muffe einzurasten, und
- ein Verriegelungsorgan (30) des Anschlussmittels in der Muffe, wobei dieses Organ zur Montage um die Einsteckmuffe bestimmt ist, um dieses Mittel reversibel in eine Verriegelungsposition in der Nut zu führen,
**dadurch gekennzeichnet, dass** diese Vorrichtung Blockier- und Freigabemittel (9A, 9B) des Verriegelungsorgans umfasst, die mit der Einsteckmuffe fest verbunden sind und die durch Biegen im Kontakt mit einem Eingangsende (12) der Muffe elastisch verformbar sind, wobei diese Blockier- und Freigabemittel ausgebildet sind, um zu verhindern, dass das Anschlussmittel in die Verriegelungsposition geführt wird, solange die Einsteckmuffe keine vorbestimmte Einfügeposition in der Muffe einnimmt, und nur, wenn die Einsteckmuffe die Einfügeposition erreicht hat, um das Verriegelungsorgan durch Genehmigung seiner Verlagerung zur Muffe derart freizugeben, dass ein Druck (A) auf dieses Organ das Anschlussmittel in die Verriegelungsposition führt.

2. Anschlussvorrichtung nach Anspruch 1, **dadurch gekennzeichnet, dass** die Blockier- und Freigabemittel (9A, 9B) durch elastisches Biegen in der Art eines Hebelarms im Kontakt mit dem Eingangsende (12) der Muffe (10) klappbar sind, wobei diese Mittel ausgebildet sind, um eine Blockierposition, in welcher das Verriegelungsorgan (30) axial an diesen Mitteln anschlägt, die radial nach außen entfaltet sind, und eine Freigabeposition, in welcher dieses Organ imstande ist, frei in Richtung der Muffe um diese Mittel zu gleiten, die radial nach innen geklappt sind, einzunehmen.

3. Anschlussvorrichtung nach Anspruch 2, **dadurch gekennzeichnet, dass** die Blockier- und Freigabemittel (9A, 9B) ein Paar Arme (9A, 9B) umfassen, die zusammenhängend mit der Einsteckmuffe (1) gebildet sind, die sich symmetrisch zueinander im Verhältnis zur Achse (X) der Einsteckmuffe ab einer axial inneren Zone derselben erstrecken, wobei diese Arme in der Blockierposition auf der einen und der anderen Seite von dieser Zone gemäß einem selben spitzen Winkel (α) entfaltet sind und in der Freigabeposition parallel zur Achse der Einsteckmuffe gefaltet sind.

4. Anschlussvorrichtung nach Anspruch 3, **dadurch gekennzeichnet, dass** das Verriegelungsorgan (30) zwei innere Kanten oder Absätze (33A, 33B) aufweist, die ausgebildet sind, um jeweils an den zwei freien Enden der in ihrer Blockierposition entfalteten Arme (9A, 9B) anzuschlagen und um sich in der Freigabeposition radial außerhalb der Arme zu befinden, wobei diese Kanten oder Absätze axial nach außen von einem axial inneren Anschlussende (20) gebildet sind, welches das Anschlussmittel (20) umfasst, und bestimmt sind, sich in der Verriegelungsposition axial außerhalb der Muffe (10) zu befinden.

5. Anschlussvorrichtung nach Anspruch 3 oder 4, **dadurch gekennzeichnet, dass** jeder der Arme (9A, 9B), beispielsweise in Form einer länglichen Lamelle, eine Außenfläche im Verhältnis zur Einsteckmuffe (1) aufweist, auf der mindestens ein hervorstehender Vorsprung (9A₁, 9A₂, 9B₁, 9B₂) gebildet ist, der ausgebildet ist, um mit dem Eingangsende (12) der Muffe (10) zusammenzuarbeiten, wenn die Einsteckmuffe die Einfügeposition einnimmt, wobei der mindestens eine Vorsprung vorzugsweise etwa in halber Höhe des entsprechenden Arms ausgebildet ist.

6. Anschlussvorrichtung nach Anspruch 5, **dadurch gekennzeichnet, dass** jeder der Arme (9A, 9B) mindestens zwei sogenannte Vorsprünge (9A₁, 9A₂, 9B₁, 9B₂) in Form von parallelen Querrippen aufweist, die imstande sind, zwecks Erreichen ihrer Freigabeposition die Schließung dieser Arme zu veranlassen, und ferner durch Kontaktreibung mit dem Eingangsende (12) der Muffe (10) ein Geräusch zu senden, das einen Bediener informiert, dass die Einfügeposition der Einsteckmuffe (1) erreicht ist und damit das Anschlussmittel (20) in der Nut (13) verriegelbar ist.

7. Anschlussvorrichtung nach einem der vorangehenden Ansprüche, **dadurch gekennzeichnet, dass** das Anschlussmittel (20) mit dem Verriegelungsorgan (30) zusammenhängend ausgebildet ist, von dem es einen axial inneren Teil bildet, wobei dieses Anschlussmittel ein axial inneres Anschlussende (20) aufweist, das mindestens zwei in der radialen Richtung elastisch verformbare Anschlussfüße (21a, 21b) umfasst, die sich axial nach innen und radial nach außen erstrecken, wobei die radial äußere und innere Fläche jedes Fußes imstande ist, in der Verriegelungsposition mittels einer Biegung jedes Fußes jeweils gegen die Nut (13) und gegen eine der entsprechenden Führungs- und Verriegelungshilfsrampen (7a, 7b), die die Einsteckmuffe (1) aufweist und die jeweils den Füßen zugeordnet sind, blockiert zu sein, wobei die Blockier- und Freigabemittel (9A, 9B) ausgebildet sind, um mit dem Verriegelungsorgan unabhängig von den Rampen und Füßen zusammenzuarbeiten.

8. Anschlussvorrichtung nach Anspruch 5 oder 6 und nach Anspruch 7, **dadurch gekennzeichnet, dass** die Arme (9A, 9B) winklig zwischen den Rampen (7a, 7b) ausgebildet sind, die beispielsweise in der Anzahl von zwei und diametral gegenüberliegend sind, wobei der mindestens eine Vorsprung (9A₁, 9A₂, 9B₁, 9B₂) jedes Arms axial außerhalb jeder der Rampen ausgebildet ist.

9. Anschlussvorrichtung nach den Ansprüchen 4 und 8, **dadurch gekennzeichnet, dass** das Verriegelungsorgan (30) die inneren Kanten oder Absätze (33A, 33B) hat, die winklig zwischen den Anschlussfüßen (21a, 21b) und axial außerhalb derselben ausgebildet sind, wobei die beispielsweise zwei Füße jeweils kreisbogenförmig sind und miteinander durch ebenso viele Kerben (22) verbunden sind, die ausgebildet sind, um diese Füße ausreichend radial biegbar zu machen.

10. Anschlussvorrichtung nach einem der vorangehenden Ansprüche, **dadurch gekennzeichnet, dass** das Verriegelungsorgan (30) Greifmittel (31) umfasst, die ein axial äußeres Ende dieses Organs bilden und mindestens ein radiales Plateau (31) aufweisen, das zur Aufnahme eines manuellen Drucks eines Bedieners in Richtung der Muffe (10) bestimmt ist, wobei dieses Organ mit der Einsteckmuffe (1) zusammenarbeitet, um für das Anschlussmittel (20) die Einnahme der Verriegelungsposition visuell anzuzeigen.

11. Anschlussvorrichtung nach Anspruch 10, **dadurch gekennzeichnet, dass** die Greifmittel (31) aus einem einzigen radialen Druckplateau (31) gebildet sind, das lösbar auf einem axial äußeren Rand (32a, 32b) des Verriegelungsorgans (30) montiert ist und das in der Verriegelungsposition mit einem axialen Verriegelungsanzeigestift (8) zusammenarbeitet, der sich zwischen zwei Stützflächen (4a und 4b) der Einsteckmuffe (1) derart erstreckt, dass dieser Stift der Einsteckmuffe genau an der Außenfläche des Plateaus anliegt, wobei sich diese Fläche dann axial auf der Ebene und zwischen diesen zwei Stützflächen befindet.

12. Rückflusskreis einer Kraftstoffeinspritzung, umfassend eine rohrförmige Einsteckmuffe (1), die mittels einer Anschlussvorrichtung an eine rohrförmige Muffe (10) angeschlossen ist, **dadurch gekennzeichnet, dass** diese Vorrichtung einem der vorangehenden Ansprüche entspricht.

13. Verfahren zur Montage in Verriegelungsposition und zur Demontage einer Anschlussvorrichtung nach einem der Ansprüche 1 bis 11 in einer rohrförmigen Muffe (10), die an eine Einsteckmuffe (1) anzuschließen ist, welche diese Vorrichtung umfasst, **dadurch gekennzeichnet, dass** es für diese Montage die folgenden aufeinanderfolgenden Schritte umfasst:
a) Positionieren des Anschlussmittels (20) und des Verriegelungsorgans (30) um die Einsteckmuffe derart, dass das Verriegelungsorgan axial an den Blockier- und Freigabemitteln anschlägt, was eine Verlagerung des Anschlussmittels axial nach innen verhindert,
b) Einstecken der Einsteckmuffe in die Muffe, um sie mit dieser in der vorbestimmten Einfügeposition zu verbinden, wodurch diese Blockier- und Freigabemittel im Kontakt mit dem Eingangsende (12) der Muffe derart elastisch durch Biegung verformt werden, dass das Verriegelungsorgan nicht mehr an diesen Mitteln anschlägt, die dann die Verlagerung des Anschlussmittels axial nach innen erlauben, dann
c) Ausüben eines axialen Drucks (A) nach innen auf das Verriegelungsorgan, um das Anschlussmittel in die Verriegelungsposition im Innern der Nut (13) der Muffe zu führen,
und dass für die Demontage der Vorrichtung ein Zug axial nach außen auf das Verriegelungsorgan ausgeübt wird, wobei die Einsteckmuffe derart am Boden der Muffe verbleibt, dass aus dieser das Anschlussmittel herausgezogen wird und danach die Einsteckmuffe aus der Muffe herausgezogen wird.

14. Verfahren nach Anspruch 13, **dadurch gekennzeichnet, dass** veranlasst wird, dass in Schritt a) zwei innere Kanten der Absätze (33A, 33B) des Verriegelungsorgans (30), die axial in die Außenrichtung des Anschlussmittels (20) ausgebildet sind, an jeweiligen freien Enden von zwei klappbaren Armen (9A, 9B) anschlagen, die die Blockier- und Freigabemittel (9A, 9B) bilden, danach, dass in Schritt b) diese Arme radial in das Innere der entsprechenden inneren Kanten oder Absätze im Kontakt mit dem Eingangsende (12) der Muffe (10) durch Biegung geklappt werden, wobei mindestens ein externer Vorsprung (9A₁, 9A₂, 9B₁, 9B₂), der sich etwa in halber Höhe jedes Arms befindet, an einer Abschrägung (12a) dieses Eingangsendes reibt.

15. Verfahren nach Anspruch 14, **dadurch gekennzeichnet, dass** sich die inneren Kanten oder Absätze (33A, 33B) des Verriegelungsorgans (30) in der Verriegelungsposition, die nach Schritt c) erreicht ist, axial außerhalb der Muffe (10) befinden, und dass zwei diametral gegenüberliegende und elastisch verformbare Anschlussfüße (21a, 21b), welche die Anschlussmittel (20) bilden, durch Biegung an der Nut (13) und an zwei entsprechenden Führungs- und Verriegelungshilfsrampen (7a, 7b) blockiert sind, welche die Einsteckmuffe (1) aufweist und die jeweils den Füßen zugeordnet sind, die sich winklig auf der einen und der anderen Seite der Arme (9A, 9B) befinden.

## Claims

1. Connection device for a fluid transfer line, in particular a low-pressure line, comprising:
- a tubular male termination (1),
- a connecting means (20) configured to be mounted around the male termination while being connected to a tubular female termination (10), this means being configured to be accommodated in a connecting groove (13) of the female termination, and
- a locking member (30) for locking the connecting means in the female termination, this member being configured to be mounted around the male termination to reversibly move these means into a locking position in said groove,
**characterized in that** the device comprises means (9A, 9B) for immobilizing and releasing the locking member that are rigidly fastened to the male termination and are elastically deformable by bending in contact with an entry end (12) of the female termination, these immobilizing and release means being configured to prevent said connecting means from being moved to said locking position unless the male termination occupies a predetermined insertion position in the female termination and, only if the male termination has reached said insertion position, to release the locking member while allowing its movement toward the female termination so that a thrust (A) on this member moves said connecting means into said locking position.

2. Connecting device according to Claim 1, **characterized in that** said immobilizing and release means (9A, 9B) are retractable by elastic bending in the manner of lever arms in contact with said entry end (12) of the female termination (10), these means being configured to occupy an immobilizing position in which the locking member (30) abuts axially on these means which are deployed radially outward, and a release position in which this member is able to slide freely toward the female termination around these means that are retracted radially inward.

3. Connecting device according to Claim 2, **characterized in that** said immobilizing and release means (9A, 9B) comprise a pair of arms (9A, 9B) formed in one piece with the male termination (1) that extend symmetrically to each other with respect to the axis (X) of the male termination from an axially internal area thereof, these arms, in said immobilizing position, being deployed on either side of this area at a same acute angle (α) and, in said release position, being bent parallel to the axis of the male termination.

4. Connecting device according to Claim 3, **characterized in that** the locking member (30) includes two internal rims or shoulders (33A, 33B) that are configured to abut on two free ends of said arms (9A, 9B), respectively, deployed in their immobilizing position, and to lie radially outside the arms in said release position, these rims or shoulders being formed axially toward the exterior of an axially interior connecting end (20) of said connecting means (20) and being configured to lie axially outside the female termination (10) in said locking position.

5. Connecting device according to Claim 3 or Claim 4, **characterized in that** each of said arms (9A, 9B), of oblong blade shape, for example, has an external face relative to the male termination (1) on which is formed at least one projecting protuberance (9A₁, 9A₂, 9B₁, 9B₂) configured to cooperate with said entry end (12) of the female termination (10) when the male termination occupies said insertion position, said at least one protuberance preferably being formed substantially at the mid-height of the corresponding arm.

6. Connection device according to Claim 5, **characterized in that** each of said arms (9A, 9B) has at least two of said protuberances (9A₁, 9A₂, 9B₁, 98₂) in the form of parallel transverse ribs that are configured to cause these arms to close to obtain its release position and furthermore to emit, by rubbing in contact with said entry end (12) of the female termination (10), a noise informing an operator that said insertion position of the male termination (1) has been reached and therefore that said connecting means (20) can be locked in said groove (13).

7. Connection device according to any one of the preceding claims, **characterized in that** said connecting means (20) is formed in one piece with the locking member (30) of which it forms an axially interior part, this connecting means including an axially interior connecting end (20) comprising at least two connecting lugs (21a, 21b) elastically deformable in the radial direction extending axially inward and radially outward, the radially external and internal faces of each lug being able to be immobilized in said locking position by bending of each lug, respectively against said groove (13) and against one of the corresponding guide and locking aid ramps (7a, 7b) of the male termination (1) that are respectively associated with said lugs, said immobilizing and release means (9A, 9B) being configured to cooperate with the locking member independently of said ramps and lugs.

8. Connection device according to Claim 5 or 6 and according to Claim 7, **characterized in that** said arms (9A, 9B) are formed angularly between said ramps (7a, 7b) of which there are two and which are diametrically opposed for example, said at least one protuberance (9A₁, 9A₂, 9B₁, 9B₂) of each arm being formed axially outside each of the ramps.

9. Connection device according to Claims 4 and 8, **characterized in that** the locking member (30) has said internal rims or shoulders (33A, 33B) that are formed angularly between said connecting lugs (21a, 21b) and axially outside the latter, said lugs, of which there are two for example, each being of circular arc shape and the lugs being interconnected by as many notches (22) configured to render these lugs sufficiently deformable in radial bending.

10. Connection device according to any one of the preceding claims, **characterized in that** the locking member (30) comprises holding means (31) forming an axially exterior end of this member and having at least one radial plate (31) configured to be pushed manually by an operator toward the female termination (10), this member cooperating with the male termination (1) to give a visual indication that said locking position for said connecting means (20) has been reached.

11. Connection device according to Claim 10, **characterized in that** said holding means (31) are constituted of a single radial thrust plate (31) that is removably mounted on an axially exterior edge (32a, 32b) of the locking member (30) and which, in said locking position, cooperates with an axial locking indicator pin (8) extending between two bearing surfaces (4a and 4b) of the male termination (1) so that this pin of the male termination is flush with the external face of said plate, which face is then axially level with and between these two bearing surfaces.

12. Fuel injector return circuit including a tubular male termination (1) connected to a tubular female termination (10) by a connection device, **characterized in that** this device is as defined in any one of the preceding claims.

13. Method of mounting in a locking position and of demounting a connection device according to any one of Claims 1 to 11 in a tubular female termination (10) to be connected to a male termination (1) of the device, **characterized in that** it comprises the following successive mounting steps:
a) the connecting means (20) and the locking member (30) are positioned around the male termination in such a manner that the locking member abuts axially on said immobilizing and release means, which prevents axially inward movement of the connecting means,
b) the male termination is inserted into the female termination to connect it thereto in said predetermined insertion position, which elastically bends these immobilizing and release means in contact with said entry end (12) of the female termination so that the locking member no longer abuts on these means, which then allows axially inward movement of the connecting means, then
c) an axially inward thrust (A) is exerted on the locking member to move the connecting means into said locking position inside said groove (13) of the female termination,
and **in that**, for demounting the device, axially outward traction is exerted on the locking member whilst holding the male termination against the bottom of the female termination so as to extract the connecting means therefrom, after which the male termination is extracted from the female termination.

14. Method according to Claim 13, **characterized in that** in the step a) two internal rims or shoulders (33A, 33B) of the locking member (30), which are formed axially toward the exterior of said connecting means (20), are caused to abut against respective free ends of two retractable arms (9A, 9B) that form said immobilizing and release means (9A, 9B), and then **in that**, in the step b), these arms are retracted by bending radially inward of the corresponding internal rims or shoulders to the contact of said entry end (12) of the female termination (10), by rubbing at least one external protuberance (9A₁, 9A₂, 9B₁, 9B₂) situated substantially at mid-height of each arm against a chamfer (12a) of this entry end.

15. Method according to Claim 14, **characterized in that** in said locking position obtained after the step c), said internal rims or shoulders (33A, 33B) of the locking member (30) are axially outside the female termination (10), and **in that** two diametrically opposite elastically deformable connecting lugs (21a, 21b) that form said connecting means (20) are immobilized by bending against said groove (13) and against two corresponding guide and locking aid ramps (7a, 7b) of the male termination (1) that are respectively associated with said lugs, which are angularly situated on either side of said arms (9A, 9B).
